# FASCICULE DE BREVET EUROPEEN

(11) **EP 0 556 076 B1**
(45) Date de publication et mention de la délivrance du brevet: **11.10.1995**
(21) Numéro de dépôt: 93400123.1
(22) Date de dépôt: 19.01.1993
(51) Int. Cl.: F16F 13/00

(54) **Support hydroélastique**
Hydroelastisches Lager
Hydroelastic support

(30) Priorité: 10.02.1992 FR 9201465
(43) Date de publication de la demande: 18.08.1993
(73) Titulaire: AUTOMOBILES PEUGEOT, 75116 Paris (FR); AUTOMOBILES CITROEN, 92200 Neuilly-sur-Seine (FR)
(72) Inventeur: Robic, Pascal, F-35000 Rennes (FR); Le Fol, Marcel, F-35410 Domloup (FR)
(74) Mandataire: Obolensky, Michel

(56) Documents cités:
- EP-A- 0 409 707
- DE-A- 3 618 767

## Description

La présente invention concerne un support hydroélastique destiné à être interposé entre deux ensembles à suspendre l'un par rapport à l'autre.

L'invention concerne plus particulièrement un support pour la suspension d'un moteur dans un véhicule automobile.

L'invention vise à proposer un perfectionnement d'un support du type à colonne et comportant, agencées successivement selon la direction générale de sollicitation du support, une armature supérieure, une masse en matériau élastomère reliée à l'armature supérieure, une chambre de travail délimitée latéralement au moins partiellement par la masse en matériau élastomère, une cloison inférieure qui délimite la chambre de travail, une chambre d'expansion délimitée par la cloison inférieure et par une membrane inférieure souple, et une armature inférieure reliée à la masse en matériau élastomère, les chambres de travail et d'expansion étant remplies au moins partiellement d'un liquide et étant reliées entre elles par au moins un passage de communication (DE-A-3 618 767).

Un tel type de support hydroélastique peut éventuellement comporter un clapet. Un tel agencement est alors par exemple conforme à ce qui est décrit et représenté dans le document FR-A-2.467.724 qui est relatif à un support élastique assurant à la fois un bon filtrage des vibrations à haute fréquence et de faible amplitude émises par un moteur de véhicule automobile et un bon amortissement des vibrations à basse fréquence et de forte amplitude entre le moteur et la caisse du véhicule.

Le passage de communication et le clapet sont par exemple réalisés sous la forme d'un ensemble constituant la cloison inférieure de la chambre de travail comportant deux disques qui sont conformés sur leurs faces en regard pour constituer un canal de grande longueur par rapport à sa section et conformés pour constituer des sièges d'appui pour une paroi mobile en élastomère formant clapet intercalée entre les disques à leur partie centrale. La paroi mobile et déformable placée entre les disques permet le filtrage des vibrations de faible amplitude et de fréquence élevée.

L'invention vise à réduire la rigidité d'un tel type de support, avec ou sans clapet, en réponse à des sollicitations provenant du moteur situées dans une plaque de fréquence comprise notamment entre 100 Hz et 500 Hz.

On constate en effet qu'une telle réduction de la rigidité est souhaitable dans cette plage de fréquence dans laquelle, dans les conceptions connues des supports hydroélastiques, apparaissent des phénomènes de rigidification dûs à divers modes de résonnance tels que par exemple les modes de la masse en matériau élastomère et du clapet, et dûs dans certains cas à des effets de colonne indésirables.

Afin de remédier à ces inconvénients, l'invention propose une support hydroélastique du type mentionné précédemment, caractérisé en ce qu'il comporte une chambre supplémentaire étanche unique remplie au moins partiellement de liquide, qui entoure au moins en partie la masse en matériau élastomère et qui est délimitée radialement vers l'intérieur au moins en partie par la paroi externe de la masse en matériau élastomère.

Selon d'autres caractéristiques de l'invention :
- la masse en matériau élastomère présente une symétrie de révolution autour d'un axe correspondant sensiblement à la direction générale de sollicitation du support, la chambre supplémentaire étant une chambre annulaire ;
- la partie de la paroi externe de la masse en matériau élastomère s'étend axialement entre une partie de l'armature supérieure, à laquelle est reliée la masse en matériau élastomère, et l'armature inférieure ;
- la chambre supplémentaire est délimitée radialement vers l'extérieur par une cloison latérale cylindrique ;
- la cloison latérale s'étend axialement sur une hauteur supérieure à celle de la partie de la paroi externe de la masse en matériau élastomère ;
- la cloison latérale comporte un voile en matériau élastomère venu de matière avec la masse en matériau élastomère renforcé par une douille cylindrique de renfort ;
- la chambre supplémentaire est fermée à sa partie supérieure par une membrane souple venue de matière avec la masse en matériau élastomère ;
- le bord libre de la membrane souple est serti de manière étanche par un bord rabattu de la douille cylindrique de renfort ;
- la partie de l'armature supérieure à laquelle est reliée la masse en matériau élastomère est une coupelle ;
- l'armature supérieure comporte une partie supérieure reliée à l'un des deux ensembles à suspendre et une partie inférieure à laquelle est reliée la masse en matériau élastomère, ces deux parties étant reliées entre elles par un bloc en matériau élastomère ;
- le bloc en matériau élastomère est de forme sensiblement cylindrique et s'étend axialement entre les faces en vis-à-vis, respectivement inférieure et supérieure, des parties supérieure et inférieure de l'armature supérieure ;
- la partie supérieure de l'armature supérieure est une plaque qui s'étend dans un plan situé sensiblement au droit du bord supérieur de la chambre supplémentaire.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en coupe axiale d'un exemple de réalisation d'un support hydroélastique conforme aux enseignements de l'invention ;
- la figure 2 est un diagramme représentant les variations des efforts transmis en fonction de la fréquence des sollicitations et permettant d'illustrer les avantages apportés par l'invention.

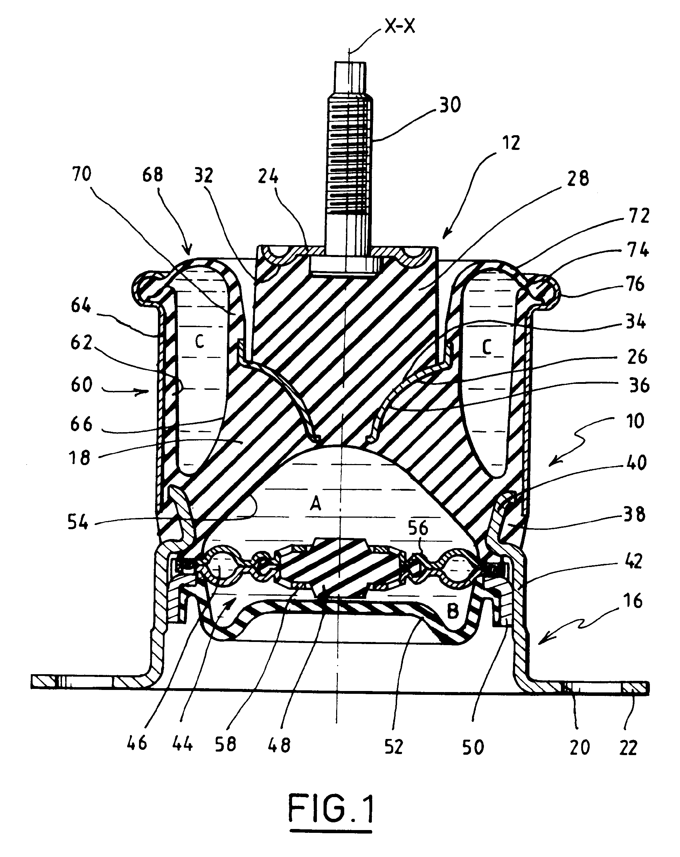

On reconnaît sur la figure 1 un support hydroélastique 10 de forme générale de révolution autour d'un axe X-X qui correspond sensiblement à la direction générale de sollicitation du support 10.

Dans la suite de la description, on utilisera les termes supérieur(e) et inférieur(e) en se référant à la position verticale du support tel qu'il est illustré à la figure 1, et ceci dans un but de simplification de la description, mais sans que cela ne constitue en aucune manière une limitation quant à l'utilisation du support et notamment quant à son positionnement réel dans un véhicule automobile.

Le support 10 comporte une armature supérieure 12 qui est reliée à une armature inférieure 16 par une masse en matériau élastomère 18.

L'armature métallique inférieure 16 est par exemple prévue pour être reliée à la structure de la caisse d'un véhicule automobile par des liaisons filetées (non représentées) prévues pour être reçues dans des trous 20 formés dans la collerette radiale inférieure 22 de l'armature inférieure 16.

L'armature supérieure 12 comporte une partie supérieure 24 et une partie inférieure 26 qui sont reliées entre elles par un bloc en matériau élastomère 28.

La partie supérieure de l'armature supérieure 12 est une plaque métallique 24 à travers laquelle fait saillie le corps fileté d'un organe de liaison fileté 30 qui permet de fixer le support par exemple au groupe motopropulseur d'un véhicule.

La partie inférieure 26 est une coupelle en tôle emboutie présentant un profil de révolution centré sur l'axe X-X.

Le bloc en matériau élastomère 28 qui relie la face inférieure 32 de la partie supérieure en forme de plaque 24 à la paroi supérieure convexe 34 de la coupelle en tôle emboutie 26 est réalisée venue de matière avec la masse en matériau élastomère 28 par surmoulage autour de la coupelle 26 qui est pratiquement entièrement noyée dans du matériau élastomère.

La masse en matériau élastomère 18 présente une forme générale tronconique annulaire de révolution autour de l'axe X-X. Son extrémité supérieure est fixée par adhérisation sur la paroi inférieure concave 36 de la coupelle 26 de l'armature supérieure 12.

La paroi annulaire de forte épaisseur de la masse en matériau élastomère 18 s'étend axialement vers le bas et son extrémité inférieure 38 est surmoulée sur le talon annulaire supérieur 40 de l'armature inférieure 16 qui est réalisée sous la forme d'une pièce cylindrique annulaire en tôle emboutie.

Le talon 40 se prolonge axialement vers le bas par une portion cylindrique inférieure 42 de l'armature 16 qui reçoit une cloison inférieure 44.

La cloison inférieure 44 est d'une structure connue par exemple du document FR-A-2.467.724 et constitue une cassette à colonne 46 et à clapet 48.

La cassette 44 est maintenue en position par une bague cylindrique 50 emmanchée dans l'alésage interne de la portion cylindrique inférieure 42.

Une membrane inférieure souple 52 en matériau élastomère est réalisée par surmoulage sur la bague inférieure 50.

La paroi interne 54 de la masse en matériau élastomère et la face supérieure 56 de la cloison 44 délimitent une chambre de travail qui communique par la colonne 46 avec une chambre d'expansion B délimitée par la face inférieure 58 de la cloison inférieure 44 et par la membrane souple 52.

Conformément à l'invention, le support hydroélastique 10 comporte une chambre supplémentaire C.

La chambre supplémentaire C est une chambre annulaire qui s'étend autour de la partie centrale du support 10 constituée d'une part par la masse en matériau élastomère 18 et d'autre part par le bloc en matériau élastomère 28.

La chambre supplémentaire annulaire C est délimitée radialement vers l'extérieur par une cloison cylindrique 60 qui est constituée par un voile en matériau élastomère 62 venu de matière avec la masse en matériau élastomère 18 et qui est renforcé par une douille cylindrique de renfort en tôle 64.

La chambre annulaire supplémentaire C est délimitée radialement vers l'intérieur d'une part, à sa partie inférieure par la paroi externe 66 de la masse en matériau élastomère 18 et d'autre part, à sa partie supérieure, par une membrane souple de fermeture 68.

La membrane 68 comporte un voile cylindrique 70 qui s'étend sensiblement parallèlement à la cloison 60 et qui se prolonge par une portion annulaire 72 formant couvercle dont le bord libre est constitué par un bourrelet 74 qui est serti de manière étanche par un bord rabattu 76 de la partie supérieure de la douille cylindrique de renfort 64.

La membrane souple 68 est également réalisée venue de matière avec la masse en matériau élastomère 18.

La réalisation du support élastique est particulièrement simple et son assemblage est aisé dans la mesure où un élément en matériau élastomère unique est surmoulé sur les composants métalliques 24, 26, 40 et 64 que le remplissage des chambres A, B et C s'effectue par immersion du support dans un bain de liquide et sertissage du bord rabattu 76 et emmanchement de la bague inférieure 50.

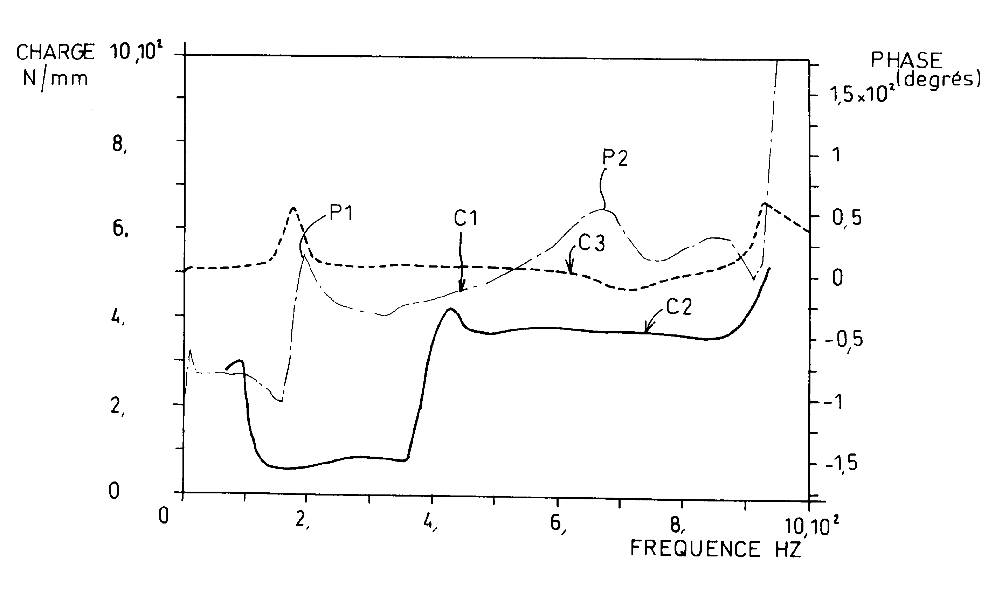

On décrira maintenant le principe de fonctionnement du support hydroélastique selon l'invention en se reportant à la figure 2 dont la courbe en traits mixtes C1 illustre le comportement d'un support à clapet selon l'état technique, dont la courbe C2 illustre le comportement d'un support réalisé conformément aux enseignements de l'invention et dont la courbe C3 indique la phase des sollicitations.

Le fonctionnement de la partie inférieure du support 10 constitué notamment par les chambres de travail A et d'expansion B reliées par la colonne 46 et le clapet 48 est d'un type connu et on pourra par exemple se reporter au document FR-A-2.467.724.

La chambre supplémentaire C permet d'obtenir, grâce à son inertie, une raideur très faible, dans une plage importante de fréquence comprise par exemple entre 120 Hz et 300 Hz.

Cet effet résulte des phénomènes de résonnances combinées de différents éléments et par exemple du clapet 48, de la masse en matériau élastomère 18 et de la masse liquide contenue dans la chambre supplémentaire C.

Dans un support de conception classique, le clapet se met à résonner ce qui provoque une rigidification du support qui atteint son maximum aux environs de 200 Hz (voir le point P1 de la courbe C1).

Au delà de la résonnance du clapet, la rigidité du support reste élevée et peut se dégrader lorsqu'apparaît la résonnance de la masse en matériau élastomère (voir le point P2 de la courbe C1).

Dans la conception selon l'invention, la masse liquide contenue dans la chambre supplémentaire annulaire C entre en résonnance aux environs de 100 Hz ce qui provoque une rigidification du support.

Par contre, à partir de 120 Hz la masse liquide, du fait de son inertie, s'oppose à la transmission d'efforts et permet d'obtenir une rigidité très faible du support.

Lorsque la résonnance de la masse en matériau élastomère apparaît, elle modifie les caractéristiques dynamiques du support en sollicitant la masse liquide contenue dans la chambre supplémentaire C et permet d'obtenir un phénomène d'étalement de la réduction de la raideur du support dans une plage importante de fréquence.

Lorsque la fréquence augmente encore, et lorsque tous les phénomènes de résonnance ont eu lieu, la rigidité de la pièce pourrait à nouveau devenir très élevée. Mais cet inconvénient est évité grâce à la présence du bloc cylindrique en matériau élastomère 28 qui permet d'assurer une rigidité relativement faible de l'ordre par exemple de 400 Newtons/mm (voir la courbe C2).

La conception du support selon l'invention permet donc d'obtenir des caractéristiques d'amortissement grâce à la colonne 46, de filtrage des sollicitations apparaissant lorsque le moteur tourne au ralenti grâce au clapet 48 et de filtrage des sollicitations provenant du moteur dans la plage de fréquence comprise entre 120 et 300 Hz.

On appelle rigidification dynamique d'un support le rapport entre la rigidité à haute fréquence et la rigidité à basse fréquence.

La rigidification dynamique du support dans la plage de fréquence comprise entre 120 Hz et 300 Hz est inférieure à 0,5 au lieu de 2 dans la majeure partie des cas des supports hydroélastiques d'une structure connue dans la technique.

De plus, la conception du support selon l'invention est particulièrement simple dans la mesure où les principaux composants sont réalisés sous la forme d'un seul moulage d'une masse en matériau élastomère et elle n'augmente donc pas le nombre des composants à assembler.

## Revendications

1. Support hydroélastique destiné à être interposé entre deux ensembles à suspendre l'un par rapport à l'autre, notamment pour la suspension d'un moteur dans un véhicule automobile, du type comportant, agencées successivement selon la direction générale (X-X) de sollicitation du support, une armature supérieure (12), une masse en matériau élastomère (18) reliée à l'armature supérieure (12), une chambre de travail (A) délimitée latéralement au moins partiellement par la masse en matériau élastomère (18), une cloison inférieure (44) qui délimite la chambre de travail (A), une chambre d'expansion (B) délimitée par la cloison inférieure (44) et par une membrane inférieure souple (52), et une armature inférieure (16) reliée à la masse en matériau élastomère (18), les chambres de travail (A) d'expansion (B) étant remplies au moins partiellement d'un liquide et étant reliées entre elles par au moins un passage de communication (46), caractérisé en ce qu'il comporte une chambre supplémentaire étanche (C) unique remplie au moins partiellement de liquide, qui entoure au moins en partie la masse en matériau élastomère (18) et qui est délimitée radialement vers l'intérieur au moins en partie par la paroi externe (66) de la masse en matériau élastomère (18).

2. Support hydroélastique suivant la revendication 1, caractérisé en ce que la masse en matériau élastomère (18) présente une symétrie de révolution autour d'un axe correspondant sensiblement à la direction générale de sollicitation du support (10), et en ce que la chambre supplémentaire (C) est une chambre annulaire.

3. Support hydroélastique selon la revendication 2, caractérisé en ce que ladite partie de la paroi externe de la masse en matériau élastomère (18) s'étend axialement entre une partie (26) de l'armature supérieure (12), à laquelle est reliée la masse en matériau élastomère, (18) et l'armature inférieure (16).

4. Support hydroélastique selon la revendication 3, caractérisé en ce que la chambre supplémentaire (C) est délimitée radialement vers l'extérieur par une cloison latérale cylindrique (60).

5. Support hydroélastique selon la revendication 4, caractérisé en ce que la cloison latérale s'étend axialement sur une hauteur supérieure à celle de ladite partie de la paroi externe (66) de la masse en matériau élastomère (18).

6. Support hydroélastique selon l'une des revendications 4 ou 5, caractérisé en ce que la cloison latérale (60) comporte un voile (64) en matériau élastomère venu de matière avec la masse en matériau élastomère (18) renforcé par une douille cylindrique de renfort (64).

7. Support hydroélastique selon l'une quelconque des revendications 1 à 6, caractérisé en ce que la chambre supplémentaire (C) est fermée à sa partie supérieure par une membrane souple (68) venue de matière avec la masse en matériau élastomère (18).

8. Support hydroélastique selon la revendication 7 prise en combinaison avec la revendication 6, caractérisé en ce que le bord libre (74) de la membrane souple de fermeture (68) est serti de manière étanche par un bord rabattu (76) de la douille cylindrique de renfort (64).

9. Support hydroélastique selon l'une quelconque des revendications 3 à 8, caractérisé en ce que la partie (26) de l'armature supérieure à laquelle est reliée la masse en matériau élastomère (18) est une coupelle.

10. Support hydroélastique selon l'une quelconque des revendications 3 à 9, caractérisé en ce que l'armature supérieure (12) comporte une partie supérieure (24) reliée à l'un des deux ensembles à suspendre et une partie inférieure (26) à laquelle est reliée la masse en matériau élastomère (18), ces deux parties (24, 26) étant reliées entre elles par un bloc en matériau élastomère (28).

11. Support hydroélastique selon la revendication 10, caractérisé en ce que le bloc en matériau élastomère est de forme sensiblement cylindrique et s'étend axialement entre les faces en vis-à-vis, respectivement inférieure (32) et supérieure (34), des parties supérieure (24) et inférieure (26) de l'armature supérieure (12).

12. Support hydroélastique selon la revendication 11, caractérisé en ce que la partie supérieure (24) de l'armature supérieure (12) est une plaque qui s'étend dans un plan situé sensiblement au droit du bord supérieur de la chambre supplémentaire (C).

## Patentansprüche

1. Hydroelastisches Lager zur Anordnung zwischen zwei Einheiten zum Aufhängen der einen relativ zur anderen, insbesondere zur Aufhängung eines Motors in einem Kraftfahrzeug, mit den folgenden Bestandteilen, die hintereinander in der Hauptbelastungsrichtung des Lagers (X-X) angeordnet sind: eine obere Armierung (12), eine Masse (18) aus elastomerem Material, die mit der oberen Armierung (12) verbunden ist, eine Arbeitskaummer (A), die seitlich mindestens teilweise von der Masse (18) aus elastomerem Material begrenzt wird, eine untere Trennwand (44), die die Arbeitskammer (A) begrenzt, eine Expansionskammer (B), die von der unteren Trennwand (44) und von einer unteren elastischen Membran (52) begrenzt wird, und eine untere Armierung (16), die mit der Masse (18) aus dem elastomeren Material verbunden ist, wobei die Arbeits- und Expansionskammern (A, B) mindestens teilweise mit einer Flüssigkeit gefüllt und über mindestens einen Verbindungskanal (46) miteinander verbunden sind, dadurch gekennzeichnet, daß das Lager eine einzige dichte Ergänzungskammer (C) aufweist, die zumindest teilweise mit Flüssigkeit gefüllt ist, mindestens teilweise die Masse (18) aus dem elastomeren Material umgibt und in Radialrichtung nach innen mindestens teilweise von der Außenwand (66) der Masse (18) aus dem elastomeren Material begrenzt wird.

2. Hydroelastisches Lager nach Anspruch 1, dadurch gekennzeichnet, daß die Masse (18) aus dem elastomeren Material rotationssymmetrisch um eine Achse ausgebildet ist, die im wesentlichen der Hauptbelastungsrichtung des Lagers (10) entspricht, und daß die Erganzungskammer (C) eine Ringkammer ist.

3. Hydroelastisches Lager nach Anspruch 2, dadurch gekennzeichnet, daß sich der Teil der Außenwand der Masse (18) aus dem elastomeren Material in Axialrichtung zwischen einem Teil (26) der oberen Armierung (12), mit dem die Masse (18) aus dem elastomeren Material verbunden ist, und der unteren Armierung (16) erstreckt.

4. Hydroelastisches Lager nach Anspruch 3, dadurch gekennzeichnet, daß die Ergänzungskammer (C) in Radialrichtung nach außen von einer seitlichen zylindrischen Trennwand (60) begrenzt wird.

5. Hydroelastisches Lager nach Anspruch 4, dadurch gekennzeichnet, daß sich die seitliche Trennwand in Axialrichtung bis auf eine Höhe erstreckt, die über der des Teiles der Außenwand (66) der Masse (18) aus dem elastomeren Material liegt.

6. Hydroelastisches Lager nach einem der Ansprüche 4 oder 5, dadurch gekennzeichnet, daß die seitliche Trennwand (60) eine schalenförmige Abdeckung (64) aus elastomerem Material umfaßt, die einstückig mit der Masse (18) aus dem elastomeren Material ausgebildet und durch eine zylindrische Verstarkungshülse (64) verstärkt ist.

7. Hydroelastisches Lager nach einem der Ansprüche 1 bis 6, dadurch gekennzeichnet, daß die Ergänzungskammer (C) an ihrem oberen Teil durch eine elastische Membran (68) geschlossen ist, die einstückig mit der Masse (18) aus dem elastomeren Material ausgebildet ist.

8. Hydroelastisches Lager nach Anspruch 7 in Verbindung mit Anspruch 6, dadurch gekennzeichnet, daß der freie Rand (74) der elastischen Verschlußmembran (68) in abgedichteter Weise durch einen umgebördelten Rand (76) der zylindrischen Verstärkungshülse (64) festgepreßt ist.

9. Hydroelastisches Lager nach einem der Ansprüche 3 bis 8, dadurch gekennzeichnet, daß der Teil (26) der oberen Armierung, mit dem die Masse (18) aus dem elastomeren Material verbunden ist, schalenförmig ausgebildet ist.

10. Hydroelastisches Lager nach einem der Ansprüche 3 bis 9, dadurch gekennzeichnet, daß die obere Armierung (12) einen oberen Teil (24), der mit einer der beiden Einheiten zum Aufhängen verbunden ist, und einen unteren Teil (26) aufweist, mit dem die Masse (18) aus dem elastomeren Material verbunden ist, wobei die beiden Teile (24, 26) über einen Block (28) aus elastomerem Material miteinander verbunden sind.

11. Hydroelastisches Lager nach Anspruch 10, dadurch gekennzeichnet, daß der Block aus elastomerem Material eine im wesentlichen zylindrische Form besitzt und sich in Axialrichtung zwischen der sich gegenüberliegenden unteren (32) und oberen (34) Fläche des oberen (24) und unteren (26) Teiles der oberen Armierung (12) erstreckt.

12. Hydroelastisches Lager nach Anspruch 11, dadurch gekennzeichnet, daß der obere Teil (24) der oberen Armierung (12) eine Platte ist, die sich in einer Ebene erstreckt, die mit dem oberen Rand der Ergänzungskammer (C) übereinstimmt.

## Claims

1. Hydroelastic support intended to be interposed between two units which are to be suspended relative to one another, especially for suspending an engine in a motor vehicle, of the type comprising the following components, arranged successively in the general direction (X-X) of stressing of the support: an upper frame (12), a mass of elastomeric material (18) connected to the upper frame (12), a working chamber (A) defined laterally at least partly by the mass of elastomeric material (18), a lower partition (44) which bounds the working chamber (A), an expansion chamber (B) bounded by the lower partition (44) and by a flexible lower membrane (52), and a lower frame (16) connected to the mass of elastomeric material (18), the working (A) and expansion (B) chambers being at least partly filled with a liquid and connected to each other by at least one communicating passage (46), characterised in that it comprises a single, leaktight supplementary chamber (C) at least partly filled with liquid, which at least partly surrounds the mass of elastomeric material (18) and is radially bounded to the inside at least partly by the outer wall (66) of the mass of elastomeric material (18).

2. Hydroelastic support according to claim 1, characterised in that the mass of elastomeric material (18) is rotationally symmetrical about an axis corresponding substantially to the general direction of stressing of the support (10) and in that the supplementary chamber (C) is an annular chamber.

3. Hydroelastic support according to claim 2, characterised in that said part of the outer wall of the mass of elastomeric material (18) extends axially between a part (26) of the upper frame (12), to which the mass of elastomeric material (18) is attached, and the lower frame (16).

4. Hydroelastic support according to claim 3, characterised in that the supplementary chamber (C) is bounded radially to the outside by a cylindrical lateral partition (60).

5. Hydroelastic support according to claim 4, characterise in that the lateral partition extends axially over a height greater than that of the said part of the outer wall (66) of the mass of elastomeric material (18).

6. Hydroelastic support according to one of claims 4 and 5, characterised in that the lateral partition (60) has a cover (64) of elastomeric material integrally formed with the mass of elastomeric material (18) reinforced by a cylindrical reinforcing socket (64).

7. Hydroelastic support according to any one of claims 1 to 6, characterised in that the supplementary chamber (C) is closed at the top by a flexible membrane (68) integrally formed with the mass of elastomeric material (18).

8. Hydroelastic support according to claim 7, taken in conjunction with claim 6, characterised in that the free edge (74) of the flexible closing membrane (68) is clamped in leaktight manner by a folded-down edge (76) of the cylindrical reinforcing socket (64).

9. Hydroelastic support according to any one of claims 3 to 8, characterised in that the part (26) of the upper frame to which the mass of elastomeric material (18) is attached is a dish.

10. Hydroelastic support according to any one of claims 3 to 9, characterised in that the upper frame (12) has an upper part (24) connected to one of the two units to be suspended and a lower part (26) to which is attached the mass of elastomeric material (18), these two parts (24, 26) being connected to each other by a block of elastomeric material (28).

11. Hydroelastic support according to claim 10, characterised in that the block of elastomeric material is substantially cylindrical in shape and extends axially between the opposing faces, namely the lower (32) and upper (34) faces, respectively, of the upper (24) and lower (26) parts of the upper frame (12).

12. Hydroelastic support according to claim 11, characterised in that the upper part (24) of the upper frame (12) is a plate which extends in a plane located substantially level with the upper edge of the supplementary chamber (C).
